Europäisches Patentamt

European Patent Office

Office européen des brevets

(11) Veröffentlichungsnummer: **0 296 368**
**A2**

## (12) EUROPÄISCHE PATENTANMELDUNG

(21) Anmeldenummer: 88108303.4

(22) Anmeldetag: 25.05.88

(51) Int. Cl.4 **B23K 7/02** , **B23K 7/04** , **B22D 11/126**

(30) Priorität: 12.06.87 DE 3719642

(43) Veröffentlichungstag der Anmeldung:
28.12.88 Patentblatt 88/52

(84) Benannte Vertragsstaaten:
AT BE FR GB IT NL

(71) Anmelder: MESSER GRIESHEIM GMBH
Hanauer Landstrasse 330
D-6000 Frankfurt/Main 1(DE)

(72) Erfinder: Münch, Gerhard
Am Wasserturm 3-5
D-6000 Frankfurt/Main(DE)

(54) Verfahren zum Brennschneiden von Werkstücken.

(57) Zur Verringerung des Schneidweges eines um eine Achse schwenkenden Schneidbrenners (10) wird dieser um eine zweite parallele Achse (11) gegenläufig zur Schneidbewegung (14) in stets gleichem Winkel zur Materialgrundlinie (13) geführt

FIG. 3

EP 0 296 368 A2

## Verfahren zum Brennschneiden von Werkstücken

Die Erfindung betrifft ein Verfahren zum Brennschneiden von Werkstücken, wie Brammen, Blöcken, Stangen, Knüppeln und dgl. mit einem Schneidbrenner, welcher von einer ersten angetriebenen Schwenkachse in einer zeigerförmigen Schneidbewegung quer zur Werkstückförderrichtung über das Werkstück geführt wird und Vorrichtungen zur Durchführung des Verfahrens.

Zum Abschneiden von Teilstücken von Stangen oder von Brammen, Blöcken oder Knüppeln werden besonders in Stranggießanlagen Vorrichtungen eingesetzt, die den Schneidbrenner in einer geradlinigen oder um einen Drehpunkt - schwenkenden Schneidbewegung über das Werkstück führen (Druckschrift 200012, Messer Greisheim GmbH "Hüttenwerksmaschinen" 1977, Seite 7, Bilder 11 bis 13, DE-OS 2645557, DE-PS 2625758 und DE-PS 2744717).

Gegenüber den Vorrichtungen zur geradlinigen Schneidbrennerführung hat das den Schneidbrenner um einen Drehpunkt schwenkende System (Brennerschwenksystem) den Vorteil, daß es einfacher und mit geringerer Anzahl von Elementen ausgeführt werden kann. Hierdurch wird neben der kostengünstigeren Herstellung der Vorrichtung die Störanfälligkeit im Hüttenwerksbetrieb verringert.

Der Nachteil des Brennerschwenksystems gegenüber geradliniger Führung des Schneidbrenners ist jedoch, daß der erforderliche Schneidweg länger ist. Der Schneidweg ist die vom Drehpunkt des Brennerschwenksystems über die Materialkanten auf die Materialgrundlinie projizierte Strecke. Dies führt zu wesentlich höheren Schneidzeiten mit der Folge von höherem Brenngas- und Sauerstoffverbrauch pro Schnitt sowie einer geringeren Anzahl von Schnitten pro Vergleichszeitraum.

Der Erfindung liegt die Aufgabe zugrunde, unter Beibehaltung der einfacheren Bauweise eines Brennerschwenksystems den Schneidweg des um einen Drehpunkt schwenkenden Schneidbrenners zu verringern.

Diese Aufgabe wird erfindungsgemäß dadurch gelöst, daß der Schneidbrenner um eine zweite parallele Achse gegenläufig zur Schneidbewegung in stets gleichem Winkel zur Materialgrundlinie geführt wird.

Wie bereits vorstehend beschrieben, ergeben sich die Nachteile des Brennerschwenksystems aus der zeigerförmigen Bewegung des Schneidbrenners. Dies hat zur Folge, daß der Schneidweg nicht der Breite des zu schneidenen Werkstückes entspricht, sondern sich beidseitig um das vom Brennerdrehpunkt über die äußerste Materialkante auf die Grundlinie des Materials projizierte Maß verlängert.

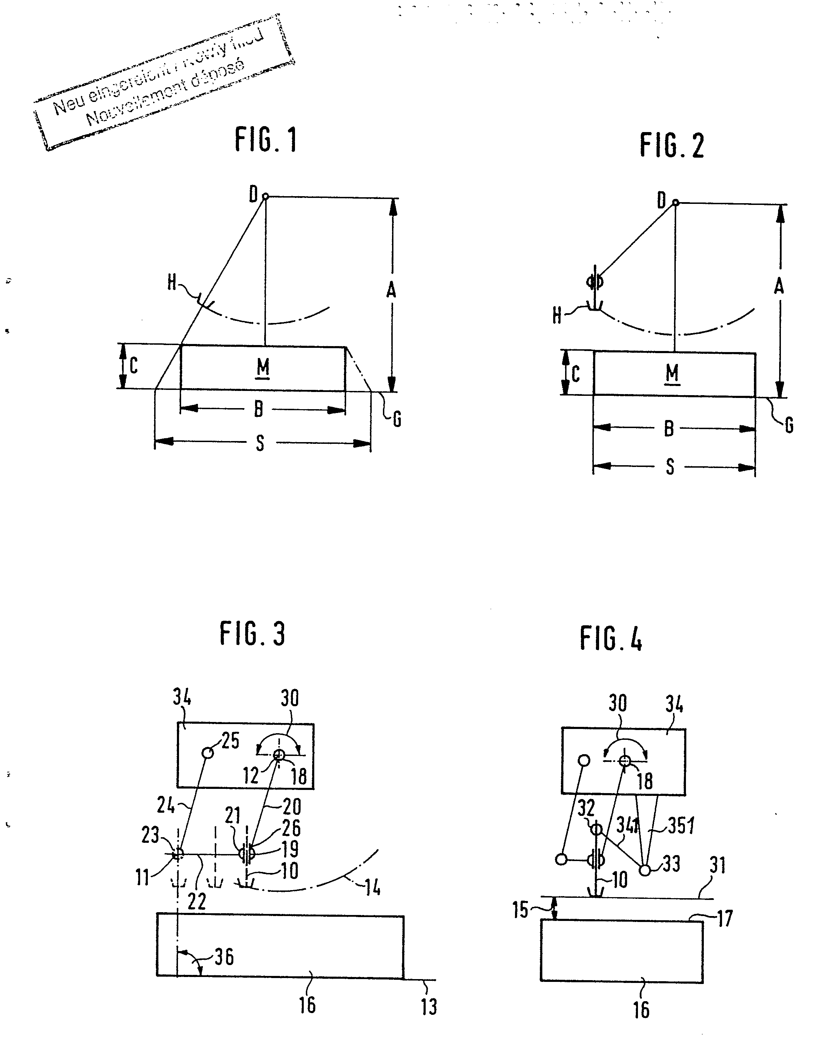

Anhand der Fig. 1 wird im folgenden die Berechnung des Schneidweges mit einem vorbekannten Brennerschwenksystem im Vergleich zu dem in Fig. 2 dargestellten System nach der Erfindung erläutert.

In der Fig. 1 ist der Drehpunkt um den der Schneidbrenner H bewegt wird mit D bezeichnet. Der Schneidbrenner befindet sich in einem Abstand A zur Materialgrundlinie G. Das Material M weist eine Breite B auf. Soll nun das Material M über seine gesamte Breite B mit einem Brennerschwenksystem geschnitten werden, so berechnet sich der Schneidweg S nach der Formel

$$S = \frac{0,5\ B}{A - C}\ x\ A\ x\ 2$$

Setzt man für den Abstand A = 1560 mm, für die Breite B = 560 mm und für die Materialdicke C = 400 mm ein, so ergibt sich nach obiger Formel ein Schneidweg von 753,1 mm.

Im Gegensatz zu diesem Schneidweg gemäß dem Stand der Technik ergibt sich bei dem Verfahren nach der Erfindung ein Schneidweg S, der immer der Breite B des Werkstücks entspricht. Im vorliegenden Beispiel entspräche dies 560 mm oder einer Verringerung des Schneidwegs gegenüber dem Stand der Technik um 25,6 %.

Obwohl es aus dem Sonderdruck Flame Cutting in Continuous Casting Plants, Messer Griesheim GmbH, Drucknummer 3811 xv 6025 CA aus dem Jahr 1965 bekannt ist, einen Schneidbrenner mittels eines Parallelogrammgestänges von einer Startposition in eine Anschnittposition zu führen, wird die Schneidbewegung mittels einer geradlinigen Brennerbewegung ausgeführt. Hierzu wird eine Vorrichtung zur geradlinigen Brennerbewegung mit den vorstehend beschriebenen Nachteilen verwendet.

Die oben beschriebenen Vorteile des verringerten Schneidwegs ergeben sich selbstverständlich auch beim Einsatz von zwei gegeneinander arbeitenden Schneidbrennern (Druckschrift 200012, Messer Griesheim GmbH, 1977, Hüttenwerksmaschinen, Seite 5, Bild 8), wenn sie entsprechend dem Verfahren nach der Erfindung geführt werden.

Vorteilhaft wird der Schneidbrenner nahezu rechtwinklig zur Materialgrundlinie geführt, so daß die Breite B des Materials M dem Schneidweg S entspricht. Selbstverständlich ist es auch möglich, den Schneidbrenner mit einer geringen Neigung zur Materialgrundlinie anzuordnen, wenn dies beispielsweise aufgrund von im Schneidraum angeordneten Maschinenteilen erforderlich ist.

Nach einer weiteren vorteilhaften Ausbildung wird der Schneidbrenner senkrecht zu der Achse in nahezu gleichem Abstand zur Werkstückoberfläche geführt, so daß die Schneiddüse des Schneidbrenners in immer gleichem Abstand zur Werkstückoberfläche steht. Vorteilhaft kann mit dieser Schneidbewegung der Schneidbrenner einerseits einer Kontur, beispielsweise einer I- oder Kreiskontur nachgeführt werden, wie sie beispielsweise im Bild 14 auf der Seite 8, der erwähnten Druckschrift "Hüttenwerksmaschinen" dargestellt ist und andererseits wird beim Teilen von Materialien mit ebener Oberfläche eine bessere Schnittqualität erreicht und die Schneidzeit weiter verringert.

Zur Durchführung des Verfahrens sind ausgehend von einem gattungsgemäßen Brennerschwenksystem unterschiedlich ausgebildete Vorrichtungen möglich. Eine besonders einfache und robuste Ausführung besteht in der Anordnung eines Parallelogrammgestänges an der angetriebenen Welle des Brennerschwenksystems, wobei der Schneidbrenner bzw. der Brennerhalter an dem mit der Welle verbundenen Tragarm, an dem horizontalen Hebel oder an dem zwischen dem Hebel und einer Stange vorgesehenen zweiten Drehgelenk angeordnet ist.

Selbstverständlich ist es auch vorteilhaft möglich, an der angetriebenen Welle nur einen Tragarm anzuordnen, an dem der Brennerhalter oder der Schneidbrenner drehbar gelagert ist. Die zur angetriebenen Welle gegenläufige Drehrichtung kann hierbei über elektrische oder mechanische Antriebe synchron gesteuert werden. Vorteilhaft kann der Schneidbrenner auch über sein Gewicht in nahezu rechtwinkliger Lage zur Materialgrundlinie gehalten werden, wenn dieses größer ist, als die in dem Drehlager auftretenden Reibungskräfte. Weitere gleichwertige Vorrichtungen zur Durchführung des Verfahrens nach der Erfindung bestehen in der Verwendung von Seil-, Ketten-, Riemen-, Kegelrad- oder ähnlichen Antrieben, mit denen die Brennerachse in einem konstanten Winkel zur Materialgrundlinie geführt wird.

Weitere vorteilhafte Ausbildungen der Erfindung sind in den Unteransprüchen angegeben.

Ausführungsbeispiele der Erfindung sind in den Zeichnungen dargestellt und werden im folgenden näher beschrieben.

Es zeigen:

Fig. 3 eine schematische Funktionsdarstellung der Anordnung eines Schneidbrenners zur Durchführung des Verfahrens nach der Erfindung;

Fig. 4 eine schematische Funktionsdarstellung entsprechend Fig. 1 mit einem in seiner Höhe verschiebbar gelagerten Schneidbrenner;

Fig. 5 ein weiteres Ausführungsbeispiel entsprechend Fig. 4 mit am Tragarm angelenkter Schubstange;

Fig. 6 ein weiteres Ausführungsbeispiel entsprechend Fig. 4 mit einem Schneidbrenner, der über eine Kulissenführung in der Höhe nachgeführt wird.

Fig. 7 ein weiteres Ausführungsbeispiel entsprechend Fig. 1 mit zwei gegenläufig arbeitenden Schneidbrennern.

Fig. 3 zeigt eine schematische Funktionsdarstellung der Anordnung eines Schneidbrenners 10 über einem Werkstück 16, wie sie zur Durchführung des Verfahrens nach der Erfindung verwendet werden kann. Der Schneidbrenner 10 ist in einem Brennerhalter 19 fest angeordnet, der über ein erstes Drehgelenk 21 mit dem freien Ende 26 eines Tragarmes 20 verbunden ist. Der Tragarm 20 ist an einer angetriebenen Welle 18 befestigt, die um die Schwenkachse 12 in Pfeilrichtung 30 schwenkbar ist. Die Welle 18 und der nicht näher dargestellte Antrieb sind an einem Maschinenteil der Brennschneidmaschine 34 angeordnet. Durch die Mitte des ersten Drehgelenks 21 verläuft die zweite Achse 11. Zum besseren Verständnis wurde die zweite Achse 11 in das zweite Drehgelenk 23 eingezeichnet. Die Materialgrundlinie ist in der Fig. 3 mit 13 und die zeigerförmige Schneidbewegung beim Schwenken der Welle 18 in Pfeilrichtung 30 mit 14 bezeichnet. An dem ersten Drehgelenk 21 ist nach einem Ausführungsbeispiel der Erfindung ein Hebel 22 angelenkt, welcher über das zweite Drehgelenk 23 mit einer Stange 24 an ein drittes Drehgelenk 25, vorzugsweise neben der Welle 18 angehängt ist. Der Schneidbrenner 10 kann, wie die durchgezogene Linie verdeutlicht, an dem ersten Drehgelenk 21 des Tragarms 20 angeordnet werden, wobei der Hebel 22 das zweite und das dritte Drehgelenk 23, 25 sowie die Stange entfallen können können. Bei einer derartigen Ausführung ist das erste Drehgelenk 21 mit einem mechanischen oder elektrischen Antrieb verbunden, der das erste Drehgelenk 21 gegenläufig zur angetriebenen Welle 18 antreibt.

In einer weiteren Ausführung ist das Gewicht des Schneidbrenners 10 und des Brennerhalters 19 größer, als die in dem ersten Drehgelenk 21 erzeugten Kräfte, so daß der Schneidbrenner 10 bei angetriebener Welle 18 immer nahezu rechtwinklig zur Materialgrundlinie 13 verbleibt. In diesem Fall können Antriebe entfallen.

Vorzugsweise ist jedoch, wie eingangs beschrieben das Drehgelenk 21 über den Hebel 22 und das zweite Drehgelenk 23 mit der Stange 24 verbunden, die an dem dritten Drehgelenk 25 angehängt ist. Über dieses Parallelogrammgestänge verbleibt der Schneidbrenner 10 während er die Schneidbewegung 14 ausführt in nahezu rechtwinkliger Lage zur Materialgrundlinie 13.

Wie die Fig. 3 zeigt, ist es auch möglich, den Schneidbrenner 10 (unterbrochene Linie) an dem Hebel 22 oder an dem zweiten Drehgelenk 23 (strichpunktiert) anzuordnen. Aus Übersichtsgründen wurde hier der Brennerhalter 19 nicht gezeichnet. Die zweite Achse 11 verläuft bei allen Ausführungsbeispielen senkrecht zu dem Schnittpunkt des Schneidbrenners 10 mit der horizontalen Ebene des Hebels 22.

In der Figur 4 ist unterschiedlich zu Fig. 3 der Schneidbrenner 10 im Brennerhalter 19 höhenverschiebbar, beispielsweise in einer Kugelbüchse gelagert. Über ein mit dem Schneidbrenner 10 verbundenes viertes Drehgelenk 32, welches über eine Schubstange 341 an ein fünftes Drehgelenk 33 angekoppelt ist, erfolgt eine synchrone Verstellung des Schneidbrenners in seiner Höhe, so daß er immer in nahezu gleichem Abstand 15 zur Werkstückoberfläche 17 des Werkstücks 16 verbleibt und eine zur Werkstückoberfläche 17 nahezu parallele Schneidbewegung 31 ausführt. Das fünfte Drehgelenk 33 ist über einen Lagerbock 351 mit der Brennschneidmaschine 34 verbunden. Selbstverständlich ist es auch möglich, das fünfte Drehgelenk 33 außerhalb der Brennschneidmaschine zu lagern.

In den Figuren 4, 5, 6 sind die in der Fig. 3 beschriebenen Bauteile gleich dargestellt, jedoch aus Übersichtsgründen nicht mit Bezugsziffern versehen.

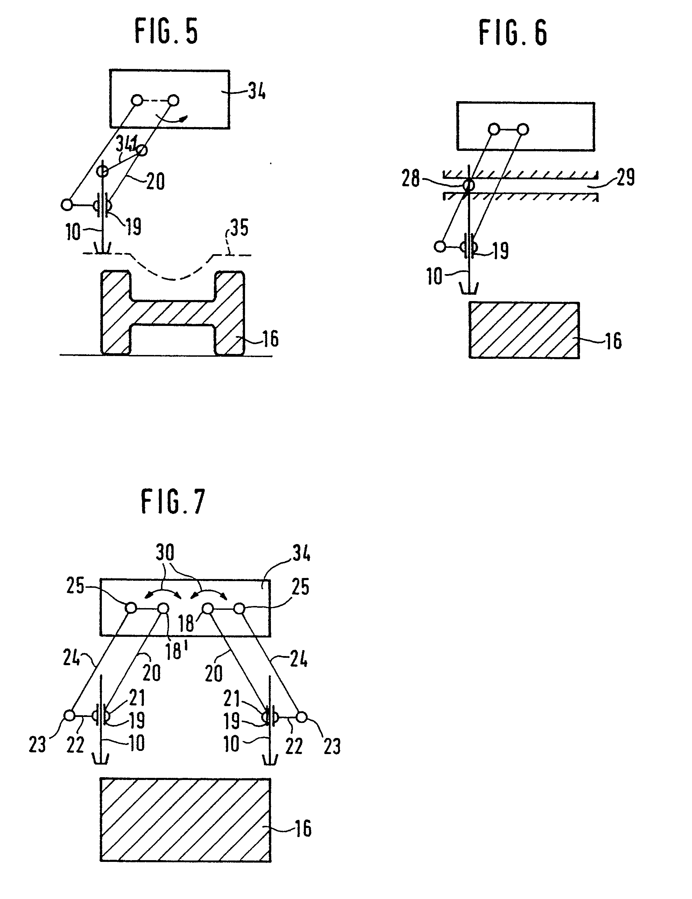

In der Fig. 5 ist unterschiedlich zu der in Fig. 4 an der Brennschneidmaschine 34 oder außerhalb der Brennschneidmaschine gelagerten Schubstange 341 dieselbe über nicht näher dargestellte Drehgelenke und/oder Linearführungen mit dem Schneidbrenner 10 und dem Tragarm 20 so verbunden, daß der Schneidbrenner eine Schneidbewegung 35 ausführt, die in etwa der Oberflächenkontur des doppel-T-förmigen Werkstücks 16 entspricht.

In der Fig. 6 ist ein weiteres Ausführungsbeispiel dargestellt, bei dem der Schneidbrenner 10 in dem Brennerhalter 19 höhenverschiebbar gelagert ist. Der Schneidbrenner 10 ist an seinem dem Werkstück 16 entgegengesetzten Ende mit einer Rolle 28 oder einem Indexstift verbunden, welche in einer Kulissenführung 29 geführt ist und den Schneidbrenner 10 in Abhängigkeit von der Schneidbewegung 14, 31, 35 in der Höhe verstellt.

In der Fig. 7 sind zwei gegeneinander - schwenkende Schneidbrenner 10 an einer Brennschneidmaschine 34 angeordnet. Jeder Schneidbrenner 10 ist über ein Parallelogrammgestänge 20, 21, 22, 23, 24, 25 mit der angetriebenen Welle 18 bzw. 18' verbunden und in Pfeilrichtung 30 - schwenkbar.

Die anhand der Figuren 1 bis 7 vorstehend beschriebene Anordnung eines Schneidbrenners zum Brennschneiden von Werkstücken arbeitet wie folgt:

Das Werkstück 16 wird in der Werkstückförderrichtung, die in die Zeichnungsebene hineinverläuft bis zum Erreichen der abzuschneidenden Teillänge gefördert. Der Schneidbrenner 10 steht vor Beginn des Anschnitts über der linken oder rechten Materialkante in Parkposition. Nach dem Erreichen der Teillänge werden die Heizgase des Schneidbrenners gezündet, die Werkstückkante erhitzt und anschließend der Schneidsauerstoff eingeschaltet. Über den nicht näher dargestellten Antrieb der Welle 18 wird der Schneidbrenner in der zeigerförmigen Schneidbewegung 14 quer zur Werkstückförderrichtung über das Werkstück 16 geführt, bis er die der Anschnittkante gegenüberliegende Materialkante erreicht hat. Während der Schneidbrenner 10 die Schneidbewegung 14, 31,35 ausführt, verbleibt der Schneidbrenner 10 aufgrund der Anordnung des Parallelogrammgestänges 20, 22, 24, 21, 23, 25 immer in nahezu gleichem Winkel 36, vorzugsweise jedoch in rechtwinkliger Lage zur Materialgrundlinie 13.

## Ansprüche

1. Verfahren zum Brennschneiden von Werkstücken, wie Brammen, Blöcken, Stangen, Knüppeln und dgl. mit einem Schneidbrenner, welcher von einer ersten angetriebenen Schwenkachse in einer zeigerförmigen Schneidbewegung quer zur Werkstückförderrichtung über das Werkstück geführt wird,
dadurch gekennzeichnet,
daß der Schneidbrenner (10) um eine zweite parallele Achse (11) gegenläufig zur Schneidbewegung (14,31,35) in stets gleichem Winkel (36) zur Materialgrundlinie (13) geführt wird.

2. Verfahren nach Anspruch 1,
dadurch gekennzeichnet,
daß der Schneidbrenner (10) nahezu rechtwinklig zur Materialgrundlinie (13) geführt wird.

3. Verfahren nach Anspruch 1 oder 2,
dadurch gekennzeichnet, daß der Schneidbrenner (10) in nahezu gleichem Abstand zur Werkstückoberfläche geführt wird.

4. Anordnung eines Schneidbrenners in einem quer zur Werkstückförderrichtung um eine erste angetriebene Welle verschwenkbaren Brennberhalter einer Brennschneidmaschine zur Durchführung des Verfahrens nach einem der Ansprüche 1 bis 3,
dadurch gekennzeichnet,
daß an der Welle ein Tragarm (20) angeordnet ist, an dessen freiem Ende (26) der Brennerhalter (19) drehbar gelagert ist.

5. Anordnung nach Anspruch 4,
dadurch gekennzeichnet,
daß die Verbindung des Tragarms (20) mit dem Brennerhalter (19) über ein erstes Drehgelenk (21) erfolgt, an dem ein Hebel (22) angeordnet ist, welcher über ein zweites Drehgelenk (23) mit einer Stange (24) an ein drittes Drehgelenk (25), vorzugsweise neben der Welle (18) angehängt ist.

6. Anordnung eines Schneidbrenners in einem quer zur Werkstückförderrichtung um eine erste angetriebene Welle verschwenkbaren Brennerhalter einer Brennschneidmaschine zur Durchführung des Verfahrens nach einem der Ansprüche 1 bis 3, dadurch gekennzeichnet, daß an der Welle (18) ein Tragarm (20) angeordnet ist, der über ein erstes Drehgelenk (21) mit einem Hebel (22) verbunden ist, welcher über ein zweites Drehgelenk (23) mit einer Stange (24) an ein drittes Drehgelenk (25), vorzugsweise neben der Welle (18) angehängt ist und der Brennerhalter (19) an dem Hebel (22) befestigt ist.

7. Anordnung eines Schneidbrenners in einem quer zur Werkstückförderrichtung am eine erste angetriebene Welle verschwenkbaren Brennerhalter einer Brennschneidmaschine zur Durchführung des Verfahrens nach einem der Ansprüche 1 bis 3, dadurch gekennzeichnet, daß an der Welle (18) ein Tragarm (20) angeordnet ist, der über ein erstes Drehgelenk (21) mit einem Hebel (22) verbunden ist, welcher über ein zweites Drehgelenkt (23) mit einer Stange (24) an ein drittes Drehgelenk (25), vorzugsweise neben der Welle (18) angehängt ist und der Brennerhalter (19) mit dem zweiten Drehgelenk (23) verbunden ist.

8. Anordnung nach einem der Ansprüchen 1 bis 7, dadurch gekennzeichnet, daß der Schneidbrenner (10) in der Brennerhalterung (19) höhenverschiebbar gelagert ist und mit einer Schubstange (341) gekoppelt ist, welche den Schneidbrenner (10) in Abhängigkeit von der Schneidbewegung (14) in der Höhe verstellt.

9. Anordnung nach Anspruch 8, dadurch gekennzeichnet, daß die Schubstange (341) an dem Tragarm (20) angelenkt ist.

10. Anordnung nach einem der Ansprüche 1 bis 7, dadurch gekennzeichnet, daß der Schneidbrenner (10) in der Brennerhalterung (19) höhenverschiebbar gelagert und mit einer Rolle (28) oder einem Indexstift verbunden ist, welche(r) in einer Kulissenführung (29) geführt ist und den Schneidbrenner (10) in Abhängigkeit von der Schneidbewegung (14) in der Höhe verstellt.

FIG. 1

FIG. 2

FIG. 3

FIG. 4

## FIG. 5

## FIG. 6

## FIG. 7